# EUROPÄISCHE PATENTSCHRIFT

(11) **EP 3 510 228 B1**
(45) Veröffentlichungstag und Bekanntmachung des Hinweises auf die Patenterteilung: **10.11.2021**
(21) Anmeldenummer: 17761883.2
(22) Anmeldetag: 05.09.2017
(51) Int. Cl.: E05F 15/689, E05F 11/48, E05F 15/697

(54) **ANTRIEBSVORRICHTUNG FÜR EINEN FENSTERHEBER, MIT EINER ANLAGESTRUKTUR AN EINEM TRÄGERELEMENT**
DRIVE DEVICE FOR A WINDOW OPENER, WITH A BEARING STRUCTURE ON A CARRIER ELEMENT
DISPOSITIF D'ENTRAÎNEMENT POUR UN LÈVE-VITRE, COMPRENANT UNE STRUCTURE D'APPUI CONTRE UN ÉLÉMENT DE SUPPORT

(30) Priorität: 06.09.2016 DE 102016216879
(43) Veröffentlichungstag der Anmeldung: 17.07.2019
(73) Patentinhaber: Brose Fahrzeugteile SE & Co. Kommanditgesellschaft, Bamberg, 96052 Bamberg (DE)
(72) Erfinder: KALB, Roland, 96269 Rossach (DE); LANGE, Gabriele, 96364 Marktrodach (DE)
(74) Vertreter: Maikowski & Ninnemann Patentanwälte Partnerschaft mbB
(86) Internationale Anmeldenummer: PCT/EP2017/072274
(87) Internationale Veröffentlichungsnummer: WO 2018/046506

(56) Entgegenhaltungen:
- EP-A1- 2 754 829
- EP-A2- 1 132 236
- DE-A1-102004 044 863
- DE-A1-102009 033 472
- DE-U1-202007 007 032

## Beschreibung

Die Erfindung betrifft eine Antriebsvorrichtung für eine Verstelleinrichtung zum Verstellen eines Fahrzeugteils, insbesondere eines Fensterhebers, nach dem Oberbegriff des Anspruchs 1.

Eine derartige Antriebsvorrichtung umfasst ein Trägerelement, eine Seiltrommel und ein an dem Trägerelement anordbares Seilausgangsgehäuse, das die Seiltrommel um eine Drehachse drehbar lagert und mit zumindest einem Gehäuseabschnitt an das Trägerelement ansetzbar ist. Eine Motoreinheit dient zum elektromotorischen Antreiben der Seiltrommel. Eine derartige Antriebsvorrichtung ist beispielsweise in der EP 1 132 236 A2 und der DE 10 2009 033 472 A1 beschrieben.

Eine derartige Antriebsvorrichtung kann insbesondere Bestandteil einer Fensterhebereinrichtung sein und somit zum Verstellen einer Fensterscheibe dienen. Eine solche Antriebsvorrichtung kann aber auch zum Verstellen eines anderen Verstellelements, beispielsweise eines Schiebedachs oder dergleichen, in einem Fahrzeug dienen.

Bei einem Fensterheber können beispielsweise an einem Aggregateträger eines Türmoduls ein oder mehrere Führungsschienen angeordnet sein, an denen je ein mit einer Fensterscheibe gekoppelter Mitnehmer geführt ist. Der Mitnehmer ist über ein biegeschlaffes, zur Übertragung von (ausschließlich) Zugkräften ausgelegtes Zugseil mit der Antriebsvorrichtung gekoppelt, wobei das Zugseil derart an der Seiltrommel angeordnet ist, dass sich bei einer Drehbewegung der Seiltrommel das Zugseil mit einem Ende auf die Seiltrommel aufwickelt und mit einem anderen Ende von der Seiltrommel abwickelt. Es kommt somit zu einem Verschieben einer durch das Zugseil gebildeten Seilschlaufe und dementsprechend zu einem Bewegen des Mitnehmers entlang der jeweils zugeordneten Führungsschiene. Angetrieben durch die Antriebsvorrichtung kann somit die Fensterscheibe verstellt werden, beispielsweise um eine Fensteröffnung an einer Fahrzeugseitentür freizugeben oder zu schließen.

Eine solche Antriebsvorrichtung muss generell dazu ausgestaltet sein, ein hinreichend großes Drehmoment zum Verstellen der Fensterscheibe zur Verfügung zu stellen. Die Antriebsvorrichtung soll dabei einen kleinen Bauraum aufweisen können, soll einfach beispielsweise an einem zugeordneten Trägerelement, beispielsweise dem Aggregateträger eines Türmoduls, zu montieren sein und soll im Betrieb ein günstiges Betriebsverhalten bei geringer Geräuschentwicklung beispielsweise an einem Türmodul einer Fahrzeugtür aufweisen.

Bei einem aus der DE 10 2004 044 863 A1 bekannten Antrieb für eine Verstelleinrichtung in einem Kraftfahrzeug ist eine Seiltrommel auf einem Lagerdom eines Antriebsgehäuses angeordnet, wobei das Antriebsgehäuse über ein Befestigungselement in Form einer Schraube mit einem Trägerelement in Form eines Aggregateträgers verbunden ist.

Im Betrieb der Antriebsvorrichtung wird die Seiltrommel, die in dem Seilausgangsgehäuse gelagert ist, über die Motoreinheit verdreht, um ein an der Seiltrommel angeordnetes Zugseil zu bewegen. Das Seilausgangsgehäuse ist hierbei drehfest an dem Trägerelement festzulegen, sodass über die Seiltrommel an dem Seilausgangsgehäuse wirkende Drehmomente nicht zu einer Bewegung des Seilausgangsgehäuses führen. Das Seilausgangsgehäuse sollte hierbei möglichst spielfrei an dem Trägerelement festgelegt sein, wobei zudem eine Schwingungsanregung des Trägerelements über das Seilausgangsgehäuse minimiert sein sollte.

Aufgabe der vorliegenden Erfindung ist es, eine Antriebsvorrichtung zur Verfügung zu stellen, die insbesondere einfach zu montieren ist und ein günstiges Betriebsverhalten im Betrieb aufweisen kann.

Diese Aufgabe wird durch einen Gegenstand mit den Merkmalen des Anspruchs 1 gelöst.

Demgemäß weist das Trägerelement eine Anlagestruktur mit einer Mehrzahl von aneinander angereihten, alternierend zueinander angeordneten Erhebungen und Vertiefungen auf. Der zumindest eine Gehäuseabschnitt des Seilausgangsgehäuses ist mit einem Fußabschnitt an die Anlagestruktur ansetzbar. Die Anlagestruktur erstreckt sich ringförmig um die Drehachse an dem Trägerelement, wobei die Erhebungen und Vertiefungen umfänglich um die Drehachse alternierend aneinander angereiht sind. Die Erhebungen und Vertiefungen bilden hierbei vorzugsweise eine periodisch umlaufende Struktur, mit radial erstreckten Bergen und Tälern, aus.

Die Anlagestruktur kann sich insbesondere ringförmig um eine Öffnung in dem Trägerelement erstrecken, über die die Seiltrommel in Getriebeverbindung mit der Motoreinheit steht.

Dadurch, dass Vertiefungen und Erhebungen alternierend aneinander angereiht sind, wird an dem Trägerelement eine Struktur geschaffen, die zum einen eine Versteifung an dem Trägerelement dort bewirkt, wo das Seilausgangsgehäuse an das Trägerelement angesetzt ist. Zum zweiten kann durch Ansetzen des Seilausgangsgehäuses mit einem oder mehreren Gehäuseabschnitten an die Anlagestruktur das Seilausgangsgehäuse drehfest und vorteilhafterweise spielfrei an dem Trägerelement angeordnet werden, sodass sich eine vorteilhafte Lage des Seilausgangsgehäuses an dem Trägerelement mit fester Verbindung zwischen dem Seilausgangsgehäuse und dem Trägerelement ergibt.

Die Anlagestruktur mit ihren alternierend aneinander angereihten Erhebungen und Vertiefungen kann beispielsweise eine Wellenstruktur ausbilden, bei der die Erhebungen durch Wellenberge und die Vertiefungen durch Wellentäler gebildet sind. Die Erhebungen und Vertiefungen sind hierbei vorteilhafterweise regelmäßig aneinander angereiht, was ermöglicht, das Seilausgangsgehäuse in unterschiedlichen Stellungen an das Trägerelement, nämlich insbesondere den um die Drehachse zueinander verdrehten Stellungen, anzusetzen.

Die Wellenstruktur an dem Trägerelement ist vorzugsweise durch wellenförmige Gestaltung bei sich nicht ändernder Dicke des Trägerelements gebildet. Durch die wellenförmige Formgebung des Trägerelements im Bereich der Anlagestruktur können auf diese Weise Materialanhäufungen vermieden werden, was einen Verzug minimieren und somit Abweichungen von einer Sollform (die ansonsten zu einem unrunden Lauf und damit zu einer Geräuschentwicklung im Betrieb führen könnten) reduzieren kann.

Um eine günstige Lage des Seilausgangsgehäuses an dem Trägerelement zu erhalten, kann der Fußabschnitt beispielsweise ein zu der Anlagestruktur des Trägerelements komplementäres Profil aufweisen. Demgemäß kann der Fußabschnitt beispielsweise zu den Erhebungen und Vertiefungen komplementäre Vertiefungen und/oder Erhebungen aufweisen, sodass der Fußabschnitt flächig unter formschlüssiger Anlage an der Anlagestruktur an das Trägerelement angesetzt werden kann.

Beispielsweise kann der Fußabschnitt eine oder mehrere Erhebungen aufweisen, die in eine oder mehrere Vertiefungen der Anlagestruktur eingesetzt werden können. Ebenso kann der Fußabschnitt eine oder mehrere Vertiefungen aufweisen, die eine oder mehrere Erhebungen der Anlagestruktur aufnehmen können.

Der Fußabschnitt ist in seiner Formgebung somit der Anlagestruktur angepasst. Es ergeben sich eine Mehrzahl von unterschiedlichen, diskreten Stellungen, in denen das Seilausgangsgehäuse an die Anlagestruktur angesetzt werden kann.

Der Fußabschnitt kann hierbei eine im Wesentlichen starre Form aufweisen, sodass sich der Fußabschnitt bei Ansetzen an die Anlagestruktur nicht oder nur geringfügig verformt.

In einer alternativen Variante kann der Fußabschnitt zumindest abschnittsweise elastisch sein, sodass der Fußabschnitt sich bei Ansetzen des Seilausgangsgehäuses an das Trägerelement elastisch verformen kann. In dieser Variante ist der Fußabschnitt nicht zwingend komplementär zu der Anlagestruktur vorgeformt. Der Fußabschnitt kann sich auch erst durch elastische Verformung bei Ansetzen des Seilausgangsgehäuses an das Trägerelement der Anlagestruktur anpassen und somit über den Fußabschnitt in eine formschlüssig fixierte Lage an der Anlagestruktur gelangen.

Ist der Fußabschnitt zumindest abschnittsweise elastisch, kann hierüber auch eine Dämpfung gegen Schwingungen im Betrieb bereitgestellt werden. Der Fußabschnitt wirkt in diesem Fall dämpfend zwischen dem Seilausgangsgehäuse und dem Trägerelement.

Soll sich der Fußabschnitt bei Ansetzen des Seilausgangsgehäuses an das Trägerelement elastisch verformen, kann vorgesehen sein, den Gehäuseabschnitt aus mehreren Materialien auszubilden, um den Gehäuseabschnitt insbesondere im Bereich des Fußabschnitts weicher zu gestalten und somit eine elastische Verformung an dem Fußabschnitt zu ermöglichen. Hierzu kann vorgesehen sein, dass der Gehäuseabschnitt in einem ersten Bereich aus einem ersten Material mit einem ersten Elastizitätsmodul und in einem zweiten Bereich, insbesondere im Bereich des Fußabschnitts, aus einem zweiten Material mit einem niedrigeren, zweiten Elastizitätsmodul gefertigt ist. Im Bereich des Fußabschnitts kann auf diese Weise der Gehäuseabschnitt weicher, also elastischer, gestaltet werden, sodass bei Ansetzen des Seilausgangsgehäuses an die Anlagestruktur des Trägerelements eine Verformung insbesondere im Bereich des Fußabschnitts stattfinden kann.

Unter dem Elastizitätsmodul (auch bezeichnet als Zugmodul, Elastizitätskoeffizient, Dehnungsmodul, E-Modul oder Youngscher Modul) wird ein Materialkennwert verstanden, der den Zusammenhang zwischen Spannung und Dehnung bei der Verformung eines festen Körpers bei linear-elastischem Verhalten beschreibt. Je höher der Elastizitätsmodul, desto steifer das Material.

Durch Ansetzen des Seilausgangsgehäuses mit einem oder mehreren Gehäuseabschnitten an die Anlagestruktur des Trägerelements kann bereits eine drehfeste Festlegung des Seilausgangsgehäuses an dem Trägerelement erfolgen. Ergänzend können hierbei, zur Drehsicherung des Seilausgangsgehäuses gegenüber dem Trägerelement, ein oder mehrere Formschlusselemente vorgesehen sein, die radial zur Drehachse beabstandet sind und beispielsweise an dem Trägerelement geformt sind (um in Formschlussöffnungen an den Fußabschnitten der Gehäuseabschnitte des Seilausgangsgehäuses einzugreifen) oder an den Fußabschnitten der Gehäuseabschnitte geformt sind (um in Formschlussöffnungen an dem Trägerelement einzugreifen).

In einer konkreten Ausgestaltung ist das Formschlusselement an dem Trägerelement angeordnet und steht gegenüber der Anlagestruktur parallel zur Drehachse vor. Bei Ansetzen des Seilausgangsgehäuses an das Trägerelement gelangt das Formschlusselement in Eingriff mit einer Formschlussöffnung an einem Fußabschnitt eines Gehäuseabschnitts, sodass auf diese Weise ein (zusätzlicher) Formschluss zwischen dem Seilausgangsgehäuse und dem Trägerelement entlang einer um die Drehachse gerichteten Belastungsrichtung gebildet wird.

Das Formschlusselement kann hierbei, bei Ansetzen des Seilausgangsgehäuses an das Trägerelement, in der Formschlussöffnung verrasten, sodass über das Formschlusselement ein verlierersicherer Halt des Seilausgangsgehäuses an dem Trägerelement geschaffen wird. Dies kann insbesondere bei der Montage hilfreich sein, um ein Abfallen des Seilausgangsgehäuses von dem Trägerelement nach Ansetzen an das Trägerelement zu verhindern.

Die Formschlussöffnung kann beispielsweise durch eine kreisbogenförmige Schlitzöffnung gebildet sein. Entsprechend ist das Formschlusselement als vorstehende, kreisbogenförmige Rippe ausgebildet.

Über die Formschlussöffnung kann der Fußabschnitt insbesondere von anderen Bereichen des Gehäuseabschnitts des Seilausgangsgehäuses freigeschnitten sein, wodurch beispielsweise die Elastizität an dem Fußabschnitt in gewünschter Weise eingestellt werden kann. Um die Verformbarkeit des Fußabschnitts zu erhöhen, kann hierbei beispielsweise vorgesehen sein, die schlitzförmige Formschlussöffnung derart weit an dem Gehäuseabschnitt zu ziehen, dass sie sich auch in von dem Fußabschnitt erstreckte Seitenwandungen des Gehäuseabschnitts hinein erstreckt. Durch dieses Freischneiden des Fußabschnitts von beispielsweise einer Rückwand des Gehäuseabschnitts kann sich der Fußabschnitt in elastischer Weise der Formgebung der Anlagestruktur anpassen, wenn das Seilausgangsgehäuse an das Trägerelement angesetzt wird.

Die Antriebsvorrichtung umfasst erfindungsgemäß ein Antriebsgehäuse, das an einer von dem Seiltrommelgehäuse abgewandten Seite des Trägerelements angeordnet ist und ein mit der Motoreinheit in Getriebeverbindung stehendes Antriebsrad lagert. Das Seilausgangsgehäuse weist vorteilhafterweise ein erstes Lagerelement zum Lagern der Seiltrommel und das Antriebsgehäuse ein zweites Lagerelement zum Lagern des Antriebsrads auf. In einer Ausgestaltung sind hierbei das Seilausgangsgehäuse und das Antriebsgehäuse über ein zwischen dem ersten Lagerelement und dem zweiten Lagerelement wirkendes Befestigungselement aneinander befestigt.

Dadurch, dass das Seilausgangsgehäuse auf einer ersten Seite des Trägerelements und das Antriebsgehäuse auf der anderen, zweiten Seite des Trägerelements über ein (einziges) Befestigungselement, das zwischen dem ersten Lagerelement und dem zweiten Lagerelement wirkt, aneinander befestigt und somit an dem Trägerelement festgelegt sind, ergibt sich eine sehr einfache Montage. Insbesondere kann zur Montage das Seilausgangsgehäuse einerseits und das Antriebsgehäuse andererseits an das Trägerelement angesetzt werden, um sodann das Seilausgangsgehäuse und das Antriebsgehäuse über das Befestigungselement, beispielsweise ein Schraubelement, miteinander zu verbinden, vorzugsweise axial zueinander zu verspannen.

Die Seiltrommel ist, bei betriebsgemäßer Anordnung in einem Fahrzeug beispielsweise an einer Fahrzeugseitentür, z.B. in einem Nassraum angeordnet, während die Motoreinheit der Antriebsvorrichtung in einem Trockenraum gelegen ist. Die Trennung zwischen dem Nassraum und dem Trockenraum kann hierbei durch das Trägerelement, beispielsweise ein aus Kunststoff hergestellter Aggregateträger eines Türmoduls, bereitgestellt werden. Durch die Montage des Seilausgangsgehäuses einerseits des Trägerelements und das Antriebsgehäuse andererseits des Trägerelements und der Verbindung über ein (einziges) zentrales Befestigungselement kann auf einfache Weise eine solche Nass-Trockenraum-Trennung erhalten werden, ohne dass diese Nass-Trockenraum-Trennung durch von einer Seite zur anderen Seite greifende Befestigungselemente beeinträchtigt ist.

Das erste Lagerelement dient zur Lagerung der Seiltrommel und kann hierzu beispielsweise als zylindrischer Lagerdom, der von einem Boden des Seilausgangsgehäuses vorsteht, ausgebildet sein. Zudem kann das zweite Lagerelement des Antriebsgehäuses, das zum Lagern des Antriebsrads auf der von der Seiltrommel abgewandten Seite des Trägerelements dient, als zylindrischer Lagerdom an dem Antriebsgehäuse ausgebildet sein. Über das Befestigungselement werden die Lagerdome axial zueinander verspannt, sodass darüber das Seilausgangsgehäuse einerseits und das Antriebsgehäuse andererseits an dem Trägerelement festgelegt werden.

Um sicherzustellen, dass bei der Montage das erste Lagerelement des Seilausgangsgehäuses und das zweite Lagerelement des Antriebsgehäuses lagerichtig aneinander angesetzt werden, kann eines der Lagerelemente vorzugsweise einen konischen Abschnitt (so genannter Zentrierkonus) aufweisen, während das andere der Lagerelemente einen Zentriereingriff, der beispielsweise durch eine konische Öffnung ausgebildet sein kann, aufweist. Bei Ansetzen des Seilausgangsgehäuses einerseits an das Trägerelement und des Antriebsgehäuses andererseits an das Trägerelement gelangen der konische Abschnitt und der Zentriereingriff miteinander in Eingriff, sodass das erste Lagerelement des Seilausgangsgehäuses und das zweite Lagerelement des Antriebsgehäuses zueinander zentriert werden und sichergestellt ist, dass das erste Lagerelement des Seilausgangsgehäuses und das zweite Lagerelement des Antriebsgehäuse koaxial zueinander ausgerichtet sind.

Der zentrierende Eingriff zwischen dem konischen Abschnitt einerseits und dem Zentriereingriff andererseits kann, in einer Ausgestaltung, beispielsweise erst beim Verspannen während der Montage hergestellt werden. So kann vorgesehen sein, dass in einer ersten Montagestellung, in der das Seilausgangsgehäuse und das Antriebsgehäuse an dem Trägerelement angeordnet, aber noch nicht über das Befestigungselement axial zueinander verspannt sind, der konische Abschnitt und der Zentriereingriff ein axiales Spiel zueinander aufweisen. In der ersten Montagestellung sind der konische Abschnitt und der Zentriereingriff somit noch nicht unmittelbar in Anlage miteinander. Insbesondere sind konische Flächenabschnitte des konischen Abschnitts einerseits und des Zentriereingriffs andererseits noch nicht aufeinander aufgelaufen. In einer zweiten Montagestellung, in der das Seilausgangsgehäuse und das Antriebsgehäuse über das Befestigungselement axial zueinander verspannt sind, sind dann jedoch der konische Abschnitt und der Zentriereingriff miteinander in Anlage. In der zweiten Montagestellung ist das Spiel zwischen dem ersten Lagerelement und dem zweiten Lagerelement aus der ersten Montagestellung somit aufgehoben. Dadurch, dass der konische Abschnitt und der Zentriereingriff miteinander in Anlage sind, sind das erste Lagerelement und das zweite Lagerelement zueinander zentriert.

Beim Verspannen des Seilausgangsgehäuses zu dem Antriebsgehäuse über das beispielsweise als Schraubelement ausgebildete Befestigungselement kann vorgesehen sein, dass sich das Seilausgangsgehäuse in einem oder in mehreren Bereichen elastisch verformt. Durch eine solche Verformbarkeit kann ein Spiel zwischen dem Seilausgangsgehäuse, dem Trägerelement und dem Antriebsgehäuse und auch ein Spiel in der Lagerung der Seiltrommel ausgeglichen werden.

Eine solche elastische Verformbarkeit kann durch gezielte Formgebung an Abschnitten des Seilausgangsgehäuses zur Verfügung gestellt werden. Beispielsweise kann eine solche elastische Verformbarkeit an dem Boden des Seilausgangsgehäuses vorgesehen sein, von dem das erste Lagerelement vorsteht. Der Boden ist hierbei über den zumindest einen Gehäuseabschnitt, der radial zu dem ersten Lagerelement des Seilausgangsgehäuses beabstandet ist, mit dem Trägerelement verbunden, sodass der Boden von dem Trägerelement abliegt und die Seiltrommel innerhalb des Seilausgangsgehäuses aufgenommen ist.

An dem Boden können beispielsweise ein oder mehrere Strukturelemente zur Versteifung des Bodens vorgesehen sein. So können an dem Boden Versteifungsrippen, die sich beispielsweise radial zur Drehachse oder umfänglich um die Drehachse erstrecken, geformt sein. Um hierbei eine Sollverformungsstelle an dem Boden zu schaffen, können eine oder mehrere dieser Versteifungsrippen abschnittsweise unterbrochen sein, indem Aussparungen an den zugeordneten Versteifungsrippen vorgesehen sind, sodass an diesen Aussparungen eine Materialschwächung geschaffen wird, die ein (elastisches) Verformen des Bodens eben an dieser Stelle ermöglicht.

Der der Erfindung zugrunde liegende Gedanke soll nachfolgend anhand der in den Figuren dargestellten Ausführungsbeispiele näher erläutert werden. Es zeigen:
- Fig. 1A: eine Explosionsansicht eines Ausführungsbeispiels einer Antriebsvorrichtung;
- Fig. 1B: die Explosionsansicht gemäß Fig. 1A, aus anderer Perspektive;
- Fig. 2: eine Ansicht eines Seilausgangsgehäuses vor Ansetzen an ein Trägerelement;
- Fig. 3: eine andere Ansicht des Seilausgangsgehäuses vor Ansetzen an das Trägerelement;
- Fig. 4A: eine Ansicht des Seilausgangsgehäuses an dem Trägerelement;
- Fig. 4B: eine ausschnittsweise vergrößerte Ansicht der Anordnung gemäß Fig. 4A;
- Fig. 5: eine gesonderte Ansicht des Seilausgangsgehäuses, schräg von unten;
- Fig. 6: eine Draufsicht auf das Seilausgangsgehäuse;
- Fig. 7: eine Querschnittansicht entlang der Linie A-A gemäß Fig. 6;
- Fig. 8: die Querschnittansicht gemäß Fig. 7, bei an das Trägerelement angesetztem Seilausgangsgehäuse;
- Fig. 9: eine Querschnittansicht entlang der Linie B-B gemäß Fig. 4A, vor Verspannen des Seilausgangsgehäuses mit einem Antriebsgehäuse über ein Befestigungselement;
- Fig. 10A: eine Ansicht eines weiteren Ausführungsbeispiels einer Antriebsvorrichtung, in einer Querschnittsansicht;
- Fig. 10B: eine vergrößerte Ansicht in einem ersten Ausschnitt gemäß Fig. 10A;
- Fig. 10C: eine vergrößerte Ansicht in einem zweiten Ausschnitt gemäß Fig. 10A;
- Fig. 10D: eine vergrößerte Ansicht in einem dritten Ausschnitt gemäß Fig. 10A;
- Fig. 11A: das Ausführungsbeispiel gemäß Fig. 10A, in einem verspannten Zustand;
- Fig. 11B: eine vergrößerte Ansicht der Anordnung gemäß Fig. 11A in dem ersten Ausschnitt;
- Fig. 11C: eine vergrößerte Ansicht der Anordnung gemäß Fig. 11A in dem zweiten Ausschnitt;
- Fig. 11D: eine vergrößerte Ansicht der Anordnung gemäß Fig. 11A in dem dritten Ausschnitt;
- Fig. 12: eine schematische Ansicht einer Verstelleinrichtung eines Fahrzeugs in Form eines Fensterhebers;
- Fig. 13A: eine Ansicht eines Ausführungsbeispiels des Seilausgangsgehäuses;
- Fig. 13B: eine Ansicht des Seilausgangsgehäuses von unten;
- Fig. 13C: eine perspektivische Ansicht des Seilausgangsgehäuses schräg von oben;
- Fig. 13D: eine Ansicht des Seilausgangsgehäuses von oben;
- Fig. 13E: eine Seitenansicht des Seilausgangsgehäuses;
- Fig. 13F: eine Schnittansicht entlang der Linie C-C gemäß Fig. 13D;
- Fig. 14: eine vergrößerte Darstellung einer Anlagestruktur an dem Trägerelement zum Ansetzen des Seilausgangsgehäuses;
- Fig. 15A: eine schematische Darstellung eines Ausführungsbeispiels eines Gehäuseabschnitts des Seilausgangsgehäuses, vor Ansetzen an eine Anlagestruktur des Trägerelements;
- Fig. 15B: die Anordnung gemäß Fig. 15A, nach Ansetzen des Gehäuseabschnitts an die Anlagestruktur;
- Fig. 16: eine schematische Ansicht eines anderen Ausführungsbeispiels eines Gehäuseabschnitts, vor Ansetzen an die Anlagestruktur;
- Fig. 17A: eine schematische Ansicht eines wiederum anderen Ausführungsbeispiels eines Gehäuseabschnitts, vor Ansetzen an die Anlagestruktur;
- Fig. 17B: die Anordnung gemäß Fig. 17A, bei Ansetzen an die Anlagestruktur;
- Fig. 17C: die Anordnung gemäß Fig. 17A und 17B, in angesetzter Stellung;
- Fig. 18: eine schematische Ansicht eines wiederum anderen Ausführungsbeispiels eines Gehäuseabschnitts des Seilausgangsgehäuses, vor Ansetzen an die Anlagestruktur; und
- Fig. 19: eine schematische Ansicht eines wiederum anderen Ausführungsbeispiels eines Gehäuseabschnitts vor Ansetzen an die Anlagestruktur des Trägerelements.

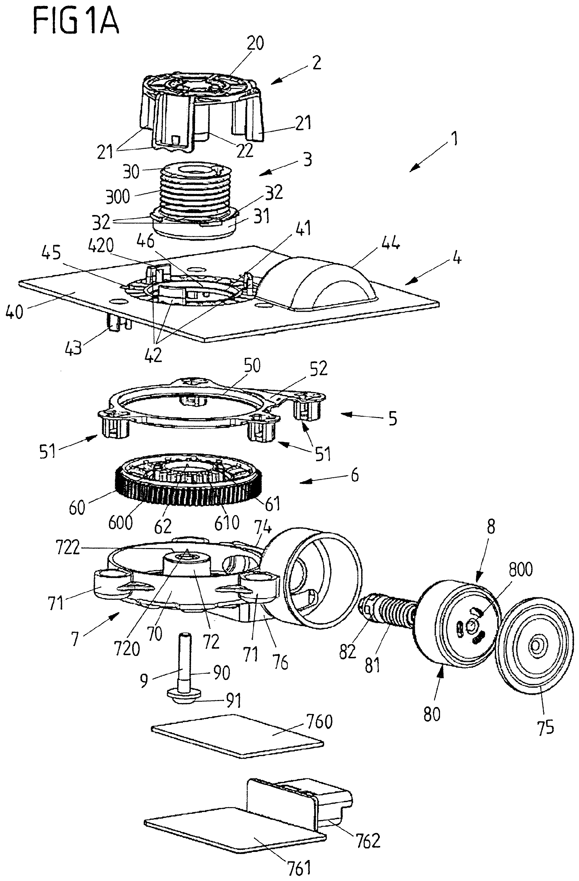

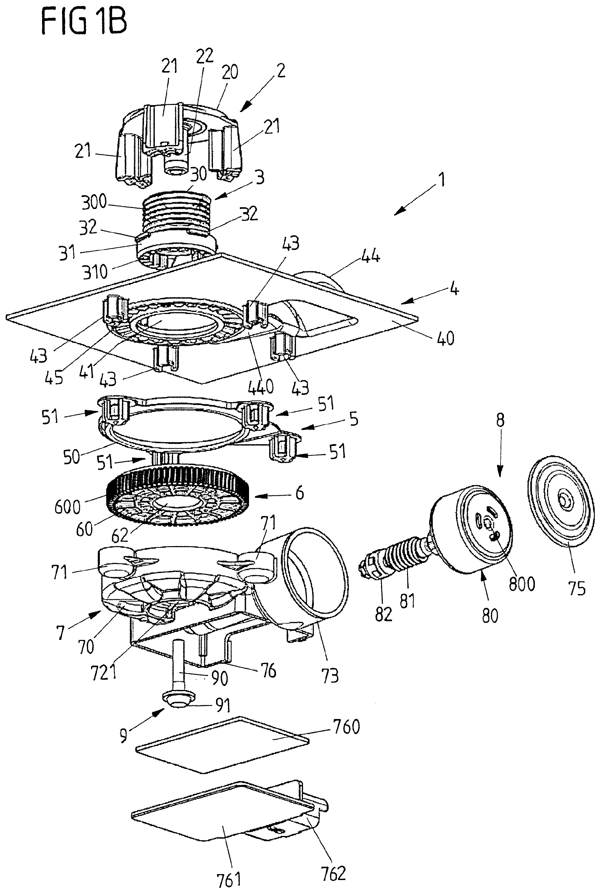

Fig. 1A, 1B bis 9 zeigen ein erstes Ausführungsbeispiel einer Antriebsvorrichtung 1, die beispielsweise als Antrieb in einer Verstelleinrichtung zum Verstellen einer Fensterscheibe beispielsweise einer Fahrzeugseitentür Verwendung finden kann.

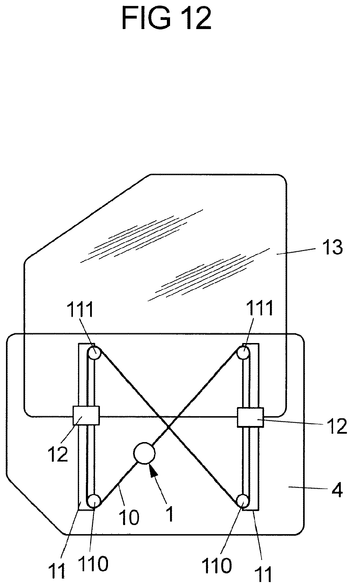

Eine solche Verstelleinrichtung in Form eines Fensterhebers, beispielhaft dargestellt in Fig. 12, weist beispielsweise ein Paar von Führungsschienen 11 auf, an denen jeweils ein Mitnehmer 12, der mit einer Fensterscheibe 13 gekoppelt ist, verstellbar ist. Jeder Mitnehmer 12 ist über ein Zugseil 10, das zur Übertragung von (ausschließlich) Zugkräften ausgebildet ist, mit einer Antriebsvorrichtung 1 gekoppelt, wobei das Zugseil 10 eine geschlossene Seilschlaufe ausbildet und dazu mit seinen Enden mit einer Seiltrommel 3 (siehe zum Beispiel Fig. 1A und 1B) der Antriebsvorrichtung 1 verbunden ist. Das Zugseil 10 erstreckt sich von der Antriebsvorrichtung 1 um Umlenkrollen 110 an den unteren Enden der Führungsschienen 11 hin zu den Mitnehmern 12 und von den Mitnehmern 12 um Umlenkrollen 111 an den oberen Enden der Führungsschienen 11 zurück zur Antriebsvorrichtung 10.

Im Betrieb treibt eine Motoreinheit der Antriebsvorrichtung 1 die Seiltrommel 3 derart an, dass das Zugseil 10 mit einem Ende auf die Seiltrommel 3 aufgewickelt und mit dem anderen Ende von der Seiltrommel 3 abgewickelt wird. Hierdurch verschiebt sich die durch das Zugseil 10 gebildete Seilschlaufe ohne Änderung der frei erstreckten Seillänge, was dazu führt, dass die Mitnehmer 12 an den Führungsschienen 11 gleichgerichtet bewegt und dadurch die Fensterscheibe 13 entlang der Führungsschienen 11 verstellt wird.

Der Fensterheber ist bei dem Ausführungsbeispiel gemäß Fig. 12 an einem Aggregateträger 4 eines Türmoduls angeordnet. Der Aggregateträger 4 kann beispielsweise an einem Türinnenblech einer Fahrzeugtür festzulegen sein und stellt eine vormontierte Einheit dar, die vormontiert mit an dem Aggregateträger 4 angeordnetem Fensterheber an der Fahrzeugtür montiert werden kann.

Die Antriebsvorrichtung 1 des Ausführungsbeispiels gemäß Fig. 1A, 1B bis 9 ist an einem Flächenabschnitt 40 eines z.B. durch einen Aggregateträger verwirklichten Trägerelements 4 angeordnet und weist ein an einer ersten Seite des Trägerelements 4 angeordnetes Seilausgangsgehäuse 2 und ein an einer von der ersten Seite abgewandten, zweiten Seite des Trägerelements 4 angeordnetes Antriebsgehäuse 7 auf. Das Seilausgangsgehäuse 2 dient dazu, die Seiltrommel 3 an dem Trägerelement 4 zu lagern, während das Antriebsgehäuse 7 unter anderem ein Antriebsrad 6 einfasst, das über eine Motoreinheit 8 angetrieben werden kann und mit der Seiltrommel 3 in Verbindung steht, sodass durch Verdrehen des Antriebsrads 6 die Seiltrommel 3 angetrieben werden kann.

Die Seiltrommel 3 an der ersten Seite des Trägerelements 4 ist, bei bestimmungsgemäßer Anordnung beispielsweise an einer Fahrzeugtür eines Fahrzeugs, in einem Nassraum der Fahrzeugtür angeordnet. Das Antriebsgehäuse 7 befindet sich demgegenüber im Trockenraum der Fahrzeugtür. Die Trennung zwischen Nassraum und Trockenraum wird durch das Trägerelement 4 hergestellt, und entsprechend ist die Schnittstelle zwischen dem Antriebsrad 6 und der Seiltrommel 3 feuchtigkeitsdicht abzudichten, sodass keine Feuchtigkeit von dem Nassraum in den Trockenraum gelangen kann.

Das Seilausgangsgehäuse 2 weist einen Boden 20, ein zentral von dem Boden 20 vorstehendes, zylindrisches Lagerelement 22 in Form eines Lagerdoms und radial zu dem Lagerelement 22 beabstandete Gehäuseabschnitte 21 in Form von parallel zu dem zylindrischen Lagerelement 22 erstreckten Gehäusestegen auf. An dem Lagerelement 22 ist die Seiltrommel 3 drehbar gelagert und dabei derart von dem Seilausgangsgehäuse 2 eingefasst, dass die Seiltrommel 3 an dem Trägerelement 4 gehalten ist.

Die Seiltrommel 3 weist einen Körper 30 und, an der umfänglichen Mantelfläche des Körpers 30, eine in den Körper 30 eingeformte Seilrille 300 zur Aufnahme des Zugseils 10 auf. Mit einem Hohlrad 31 ist die Seiltrommel 3 in eine Öffnung 41 des Trägerelements 4 eingesetzt und mit dem Antriebsrad 6 drehfest verbunden, sodass eine Drehbewegung des Antriebsrads 6 zu einer Drehbewegung der Seiltrommel 3 führt.

Das Antriebsgehäuse 7 ist unter Zwischenlage eines Dichtelements 5 an die andere, zweite Seite des Trägerelements 4 angesetzt und weist einen Gehäusetopf 70 mit einem zentral darin ausgebildeten Lagerelement 72 in Form eines zylindrischen Lagerdoms auf, das eine Öffnung 62 des Antriebsrads 6 durchgreift und das Antriebsrad 6 auf diese Weise drehbar lagert. An den Gehäusetopf 70 schließt ein Schneckengehäuse 74 an, in dem eine Antriebsschnecke 81 einliegt, die drehfest mit einer Antriebswelle 800 eines Elektromotors 80 der Motoreinheit 8 verbunden ist und über eine Schneckenverzahnung mit einer Außenverzahnung 600 eines Körpers 60 des Antriebsrads 6 in Verzahnungseingriff steht. Die Antriebswelle 800 ist über ein Lager 82 an ihrem dem Elektromotor 80 abgewandten Ende in dem Schneckengehäuse 74 gelagert. Der Elektromotor 80 liegt hierbei in einem Motortopf 73 des Antriebsgehäuses 7 ein, der über einen Gehäusedeckel 75 nach außen hin verschlossen ist.

Das Antriebsgehäuse 7 weist zudem ein Elektronikgehäuse 76 auf, in dem eine Platine 760 mit einer darauf angeordneten Steuerelektronik eingefasst ist. Das Elektronikgehäuse 76 ist nach außen hin über eine Gehäuseplatte 761 mit einem daran angeordneten Steckverbinder 762 zur elektrischen Anbindung der Elektronik der Platine 760 verschlossen.

Das Antriebsrad 6 weist, axial von dem Körper 60 vorstehend, ein Verbindungsrad 61 mit einer daran geformten Außenverzahnung 610 auf, das mit dem Hohlrad 31 der Seiltrommel 3 derart in Eingriff steht, dass eine Innenverzahnung 310 des Hohlrads 31 (siehe zum Beispiel Fig. 1B) in Verzahnungseingriff mit der Außenverzahnung 610 des Verbindungsrads 61 steht. Auf diese Weise sind das Antriebsrad 6 und die Seiltrommel 3 drehfest miteinander verbunden, sodass die Seiltrommel 3 durch Antreiben des Antriebsrads 6 an dem Trägerelement 4 verdrehbar ist.

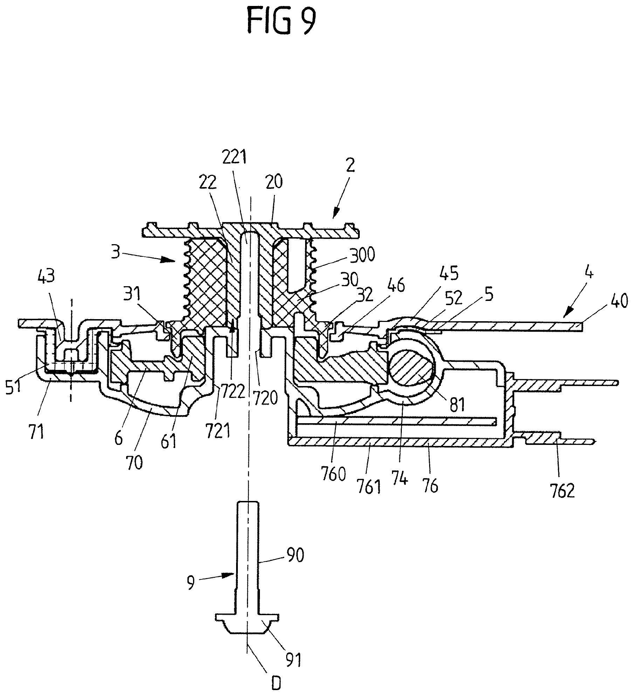

Zur Montage der Antriebsvorrichtung 1 wird das Seilausgangsgehäuse 2 einerseits an das Trägerelement 4 und das Antriebsgehäuse 7 andererseits an das Trägerelement 4 angesetzt. Die Befestigung an dem Trägerelement 4 erfolgt dann dadurch, dass ein Befestigungselement 9 in Form eines Schraubelements in eine Eingriffsöffnung 721 unterseitig des Antriebsgehäuses 7 eingesetzt wird derart, dass sich das Befestigungselement 9 durch eine Öffnung 720 in dem Lagerelement 72 des Antriebsgehäuses 7 hindurch erstreckt (siehe Fig. 9) und zentral in eine Öffnung 221 innerhalb des Lagerelements 22 des Seilausgangsgehäuses 2 eingreift. Über das Befestigungselement 9 werden das Seilausgangsgehäuse 2 und das Antriebsgehäuse 7 axial an den Lagerelementen 22, 72 zueinander verspannt und darüber an dem Trägerelement 4 festgelegt.

Innerhalb der Öffnung 221 des Lagerelements 22 des Seilausgangsgehäuses 2 kann ein Gewinde zum Aufnehmen des Befestigungselements 9 geformt sein. Denkbar und möglich ist aber auch, dass das Befestigungselement 9 selbstschneidend in die Öffnung 221 eingeschraubt wird.

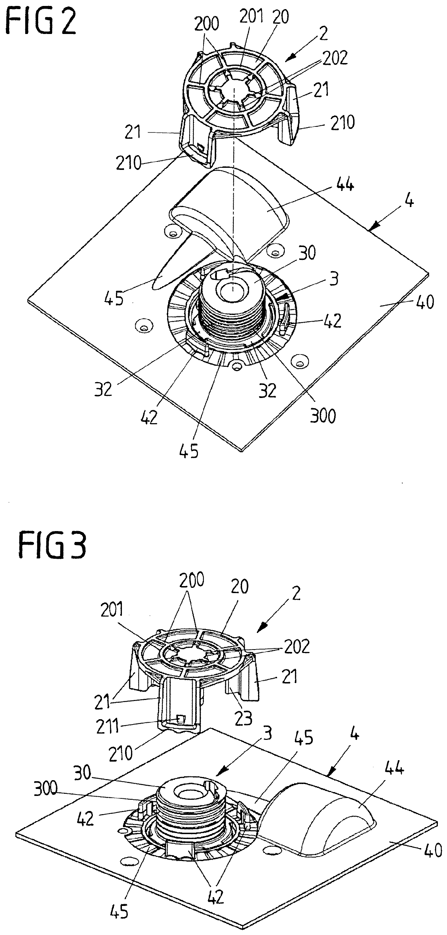

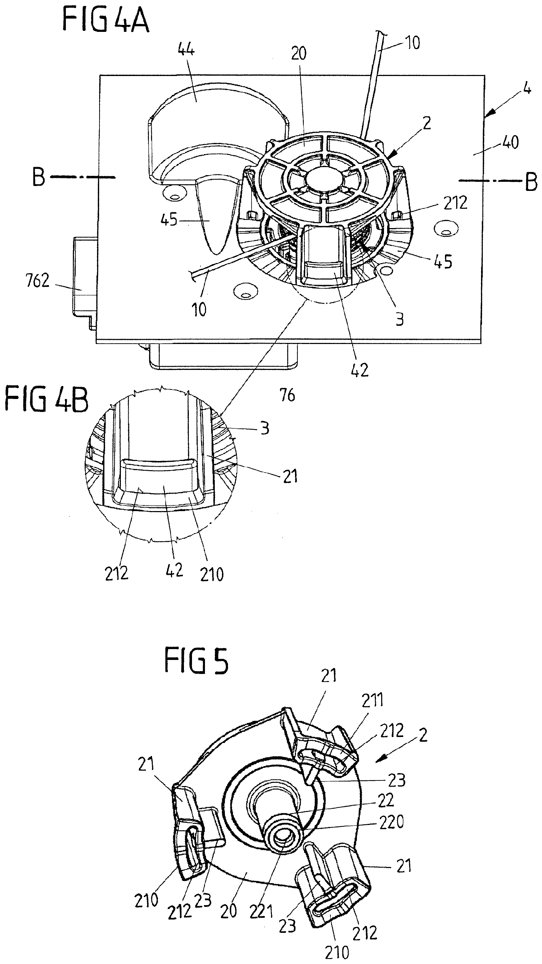

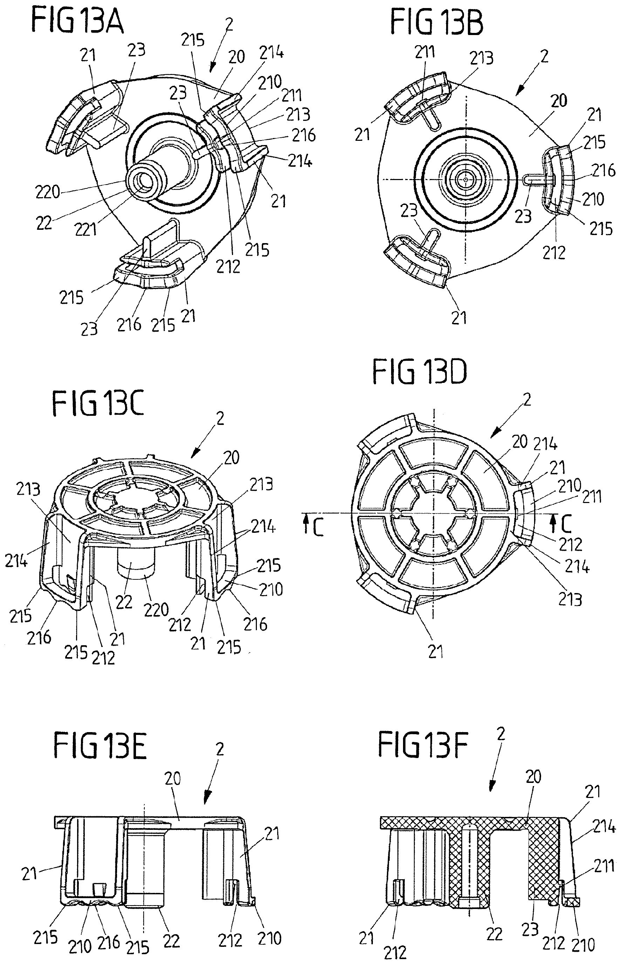

Zur Montage wird das Seilausgangsgehäuse 2 an die erste Seite des Trägerelements 4 angesetzt, sodass das Seilausgangsgehäuse 2 die Seiltrommel 3 einfasst und an dem Trägerelement 4 hält, wie dies in Fig. 2 bis 4A, 4B dargestellt ist. Das Seilausgangsgehäuse 2 kommt hierbei - wie nachfolgend noch im Einzelnen anhand von Fig. 13 bis 19 erläutert werden soll - mit seinen radial zum Lagerelement 22 beabstandeten Gehäuseabschnitten 21 über Fußabschnitte 210 in Anlage mit einer Anlagestruktur 45 in Form eines Anlagerings, der eine Öffnung 41 in dem Trägerelement 4 umfänglich umgibt.

An der Anlagestruktur 45 sind axial vorstehende Formschlusselemente 42 in Form von stegförmigen Zapfen ausgebildet, die bei Ansetzen des Seilausgangsgehäuses 2 an das Trägerelement 4 mit Formschlussöffnungen 212 (siehe Fig. 4B) an den Fußabschnitten 210 der Gehäuseabschnitte 21 in Eingriff gelangen und auf diese Weise eine Drehsicherung um die durch das Lagerelement 22 definierte Drehachse D zwischen dem Seilausgangsgehäuse 2 und dem Trägerelement 4 schaffen.

Die stegförmigen Formschlusselemente 42 können an ihren seitlichen Kanten - betrachtet entlang der Umfangsrichtung um das Lagerelement - (unter kleinem Winkel) schräg erstreckt sein, so dass bei Aufstecken der Fußabschnitte 210 auf die Formschlusselemente 42 die Gehäuseabschnitte 21 entlang der Umfangsrichtung spielfrei an den Formschlusselementen 42 festgelegt werden.

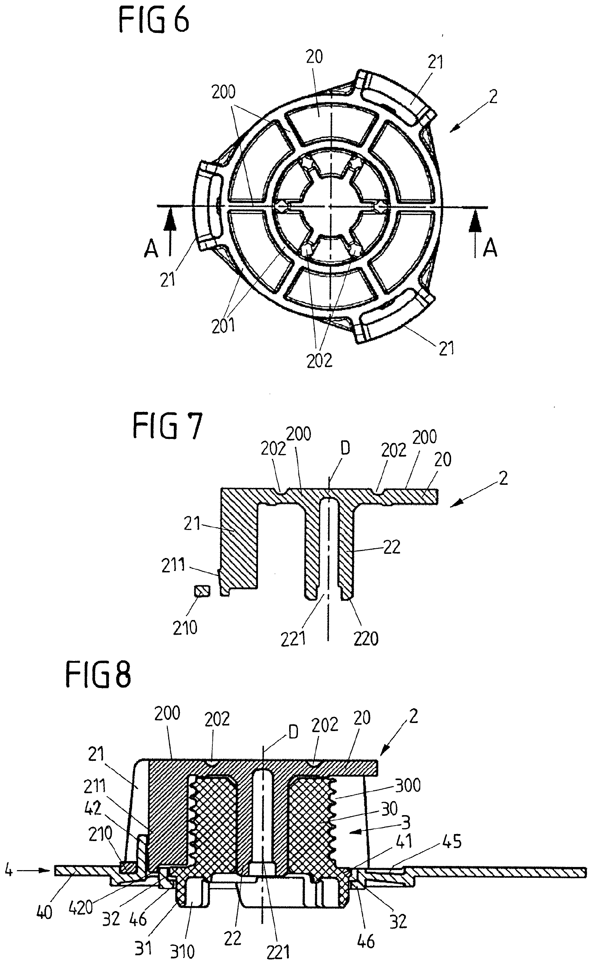

Innenseitig der Formschlusselemente 42 sind Rastausnehmungen 420 geschaffen (siehe zum Beispiel Fig. 1A), in die bei angesetztem Seilausgangsgehäuse 2 Rastelemente 211 in Form von nach außen vorstehenden Rastnasen an den Gehäuseabschnitten 21 eingreifen, wie dies beispielsweise aus einer Zusammenschau von Fig. 6 bis 8 ersichtlich ist. Über diese Rastverbindung wird in einer Vormontagestellung das Seilausgangsgehäuse 2 zusammen mit der darin eingefassten Seiltrommel 3 an dem Trägerelement 4 gehalten, auch wenn das Antriebsgehäuse 7 noch nicht über das Befestigungselement 9 mit dem Seilausgangsgehäuse 2 verspannt ist. Die Rastverbindung vereinfacht somit die Montage und verhindert ein Abfallen des Seilausgangsgehäuses 2 bei noch nicht montiertem Antriebsgehäuse 7.

Die Seiltrommel 3 kommt, in der Vormontagestellung, über radial vorstehende Auflageelemente 32 am oberen Rand des Hohlrads 31 (siehe zum Beispiel Fig. 1A) mit einem Auflagering 46 innerhalb der Öffnung 41 des Trägerelements 4 in Auflage (siehe zum Beispiel Fig. 8), sodass die Seiltrommel 3 in der Vormontagestellung nicht durch die Öffnung 41 hindurchrutschen kann und über das Seilausgangsgehäuse 2 an dem Trägerelement 4 gehalten ist.

Die Auflageelemente 32 dienen insbesondere zur Sicherung der Lage der Seiltrommel 3 an dem Trägerelement 4 in der Vormontagestellung. Nach vollständiger Montage der Antriebsvorrichtung 1 steht die Seiltrommel 3 über das Hohlrad 31 mit dem Antriebsrad 6 in Verbindung und ist axial zwischen dem Seilausgangsgehäuse 2 und dem Antriebsgehäuse 7 festgelegt.

An den Innenseiten der Gehäuseabschnitte 21 sind axial erstreckte und radial nach innen vorspringende Sicherungselemente 23 angeordnet, die der Seilrille 300 an der Mantelfläche des Körpers 30 zugewandt sind und vorzugsweise im Betrieb entlang dieser Mantelfläche gleiten. Über diese Sicherungselemente 23 wird sichergestellt, dass das in der Seilrille 300 aufgenommene Zugseil 10 nicht aus der Seilrille 300 herausspringen kann.

Das Antriebsgehäuse 7 wird an die andere, zweite Seite des Trägerelements 4 angesetzt derart, dass der Motortopf 73 in einer Ausformung 44 in dem Flächenabschnitt 40 und das Schneckengehäuse 74 in einer daran anschließenden Ausformung 440 in dem Flächenabschnitt 40 zu liegen kommt (siehe Fig. 1A, 1B und 2). Bei Ansetzen des Antriebsgehäuses 7 gelangen Befestigungseinrichtungen 71 in Form von Eingriffsbuchsen mit darin eingeformten Formschlussöffnungen 710 mit unterseitig von dem Trägerelement 4 vorstehenden Formschlusselementen 43 in Form von Zapfen in Eingriff. Dadurch, dass die Formschlussöffnungen 710 der Befestigungseinrichtungen 71 genauso wie die Formschlusselemente 43 in Form der Zapfen an dem Trägerelement 4 radial zu der durch das Lagerelement 72 des Antriebsgehäuses 7 geschaffenen Drehachse D beabstandet sind, wird durch diesen formschlüssigen Eingriff das Antriebsgehäuse drehfest an dem Trägerelement 4 festgelegt, sodass eine Drehsicherung für das Antriebsgehäuse 7 bereitgestellt wird.

An den Formschlusselementen 43 des Trägerelements 4 sind Eingriffsabschnitte 51 an einem Dichtring 50 des Dichtelements 5 angeordnet, sodass der formschlüssige Eingriff der Formschlusselemente 43 mit den Formschlussöffnungen 710 an den Befestigungseinrichtungen 71 unter Zwischenlage der Eingriffsabschnitte 51 erfolgt. Dies dient der akustischen Entkopplung.

An dem Dichtelement 5 ist ein gekrümmter Abschnitt 52 ausgebildet, der im Bereich der Ausformung 440 zur Aufnahme des Schneckengehäuses 74 zu liegen kommt. Der gekrümmte Abschnitt 52 bildet eine Zwischenlage zwischen dem Schneckengehäuse 74 und dem Trägerelement 4, sodass auch darüber eine akustische Entkopplung des Antriebsgehäuses 7 von dem Trägerelement 4 erreicht wird.

Ist das Antriebsgehäuse 7 unter Zwischenlage des Dichtelements 5 an das Trägerelement 4 angesetzt worden, so wird das Antriebsgehäuse 7 über das Befestigungselement 9 mit dem Seilausgangsgehäuse 2 verspannt, sodass darüber das Seilausgangsgehäuse 2 und das Antriebsgehäuse 7 zueinander und an dem Trägerelement 4 festgelegt werden. Wie in Fig. 9 dargestellt, wird das Befestigungselement 9 in die Eingriffsöffnung 721 innerhalb des Lagerelements 72 des Antriebsgehäuses 7 eingesetzt, sodass das Befestigungselement 9 mit einem Schaft 90 die Öffnung 720 am Kopf des Lagerelements 72 durchgreift und in die Öffnung 221 des Lagerelements 22 des Seilausgangsgehäuses 2 eingreift. Ein Kopf 91 des Befestigungselements 9 kommt hierbei an der dem Lagerelement 22 abgewandten Seite der Öffnung 720 zu liegen, sodass durch Einschrauben des Befestigungselements 9 in die Öffnung 221 innerhalb des Lagerelements 22 das Seilausgangsgehäuse 2 zu dem Antriebsgehäuse 7 verspannt wird.

Das Seilausgangsgehäuse 2 weist, wie beispielsweise aus Fig. 2 und 6 ersichtlich ist, an seinem Boden 20 an der dem Trägerelement 4 abgewandten Seite Strukturelemente 200, 201 in Form von Versteifungsrippen auf, die sich radial zu der durch das Lagerelement 22 geschaffenen Drehachse D bzw. umfänglich um die Drehachse D erstrecken und den Boden 20 versteifen. In den radial erstreckten Strukturelementen 200 sind hierbei lokal Aussparungen 202 zur Materialschwächung an den Strukturelementen 200 geschaffen, die entlang eines Rings um die Drehachse D angeordnet sind und eine Sollverformungslinie zur elastischen Verformung des Bodens 20 schaffen.

Wird das Befestigungselement 9 von Seiten des Antriebsgehäuses 7 in das Lagerelement 22 eingeschraubt, so kann sich der Boden 20 zumindest geringfügig verformen, sodass herstellungsbedingte Toleranzen ausgeglichen werden können und das Seilausgangsgehäuse 2 über die Fußabschnitte 210 an den Gehäuseabschnitten 21 spielfrei an dem Trägerelement 4 festgelegt wird.

An einem dem Boden 20 abgewandten Ende weist das Lagerelement 22 zudem einen konischen Abschnitt 220 in Form eines Zentrierkonus auf (siehe Fig. 8 und 9), der bei Verspannen des Seilausgangsgehäuses 2 zu dem Antriebsgehäuse 7 mit einem komplementär geformten Zentriereingriff an dem Lagerelement 72 des Antriebsgehäuses 7 in Eingriff gelangt und auf diese Weise eine zentrierte Lage des Lagerelements 22 des Seilausgangsgehäuses 2 zu dem Lagerelement 72 des Antriebsgehäuses 7 einstellt. Sowohl der konische Abschnitt 220 am Ende des Lagerelements 22 als auch der Zentriereingriff 722 am Kopf des Lagerelements 72 sind konisch geformt und dabei komplementär zueinander (der konische Abschnitt 220 verwirklicht einen Außenkonus, während der Zentriereingriff 722 einen Innenkonus darstellt), sodass bei einem Eingriff das Lagerelement 22 des Seilausgangsgehäuses 2 in zentrierter Weise zu dem Lagerelement 72 des Antriebsgehäuses 7 ausgerichtet wird.

Das Lagerelement 22 des Seilausgangsgehäuses 2 und das Lagerelement 72 des Antriebsgehäuses 7 schaffen hierbei eine gemeinsame Drehachse D für die Seiltrommel 3 einerseits und das Antriebsrad 6 andererseits, sodass die Seiltrommel 3 und das Antriebsrad 6 sich im Betrieb koaxial zueinander und gemeinsam miteinander verdrehen können.

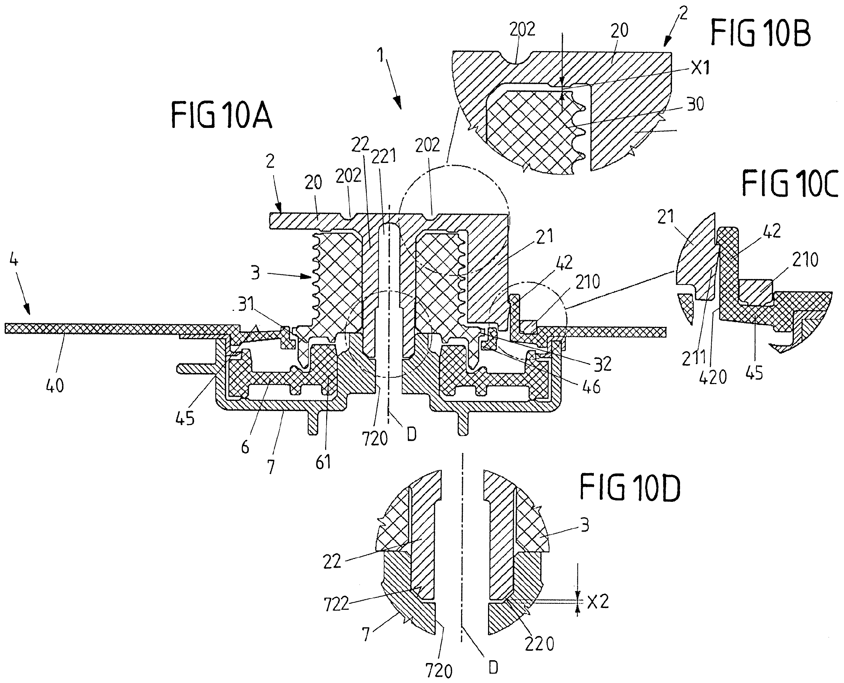

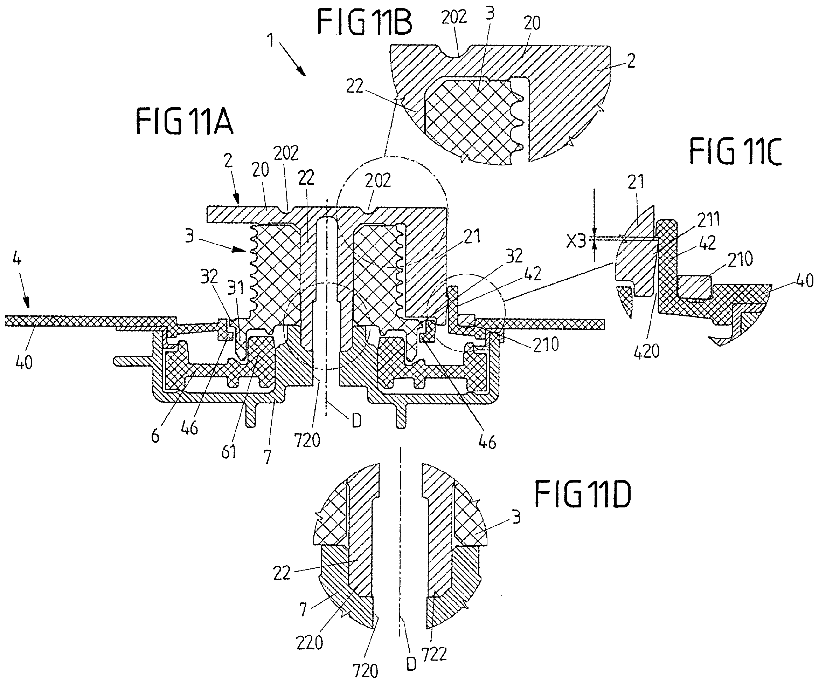

Bei einem in Fig. 10A bis 10D und 11A bis 11D dargestellten Ausführungsbeispiel ist, gegenüber dem vorangehend anhand von Fig. 1A, 1B bis 9 beschriebenen Ausführungsbeispiel, das Lagerelement 22 verlängert und greift mit seinem Ende in das Lagerelement 72 des Antriebsgehäuses 7 ein, wie dies zum Beispiel aus Fig. 10A und der vergrößerten Ansicht gemäß Fig. 10D ersichtlich ist.

Fig. 10A bis 10D zeigen hierbei die Antriebsvorrichtung 1 in einer ersten Montagestellung, bei der das Seilausgangsgehäuse 2 einerseits und das Antriebsgehäuse 7 andererseits an das Trägerelement 4 angesetzt, aber noch nicht über das Befestigungselement 9 miteinander verspannt sind. In dieser ersten Montagestellung liegt das Seilausgangsgehäuse 2 über seine Fußabschnitte 210 der Gehäuseabschnitte 21 an dem Anlagering 45 des Trägerelements 4 an (siehe die vergrößerte Ansicht gemäß Fig. 10C), wobei ein Spiel X1 zwischen der Seiltrommel 3 und dem Boden 20 (siehe die vergrößerte Ansicht gemäß Fig. 10B) und zudem auch ein Spiel X2 zwischen dem konischen Abschnitt 220 am Ende des Lagerelements 22 und dem Zentriereingriff 722 an dem Lagerelement 72 (siehe die vergrößerte Ansicht gemäß Fig. 10D) besteht.

Wird nunmehr das Seilausgangsgehäuse 2 über das Befestigungselement 9 zu dem Antriebsgehäuse 7 axial verspannt, so wird dadurch das Lagerelement 22 weiter in das Lagerelement 72 eingezogen und dadurch das Spiel X2 zwischen dem konischen Abschnitt 220 des Lagerelements 22 und dem Zentriereingriff 722 des Lagerelements 72 aufgehoben, wie dies aus der vergrößerten Ansicht gemäß Fig. 11B ersichtlich ist. Dies erfolgt unter (geringfügiger) Verformung des Bodens 20 des Seilausgangsgehäuses 2 insbesondere an den Sollverformungsstellen 202, wobei sich auch die Fußabschnitte 210 (geringfügig) verformen und dadurch ein Spiel X3 zwischen dem Rastelement 211 eines jeden Gehäuseabschnitts 21 und der Rastausnehmung 420 des jeweils zugeordneten Formschlusselements 42 in axialer Richtung eingestellt wird (Fig. 11C). Zudem wird das Spiel X1 zwischen dem Boden 20 und der Seiltrommel 3 weitestgehend aufgehoben (siehe Fig. 11B), sodass die Seiltrommel 3 axial im Wesentlichen spielfrei zwischen dem Seilausgangsgehäuse 2 und dem Lagerelement 72 das Antriebsgehäuse 7 gehalten ist, dabei aber in leichtgängiger Weise an dem Lagerelement 22 verdrehbar ist.

Ansonsten ist das Ausführungsbeispiel gemäß Fig. 10A bis 10D und 11A bis 11D funktional identisch dem Ausführungsbeispiel gemäß Fig. 1A, 1B bis 9, sodass auch auf das vorangehend Ausgeführte verwiesen werden soll.

Eine Spielfreimachung wie bei dem Ausführungsbeispiel gemäß Fig. 10A bis 10D und 11A bis 11D durch Verspannen des Seilausgangsgehäuses 2 zu dem Antriebsgehäuse 7 kann auch bei dem Ausführungsbeispiel gemäß Fig. 1A, 1B bis 9 vorgesehen sein, sodass die Ausführungsbeispiele auch insofern funktional identisch sein können.

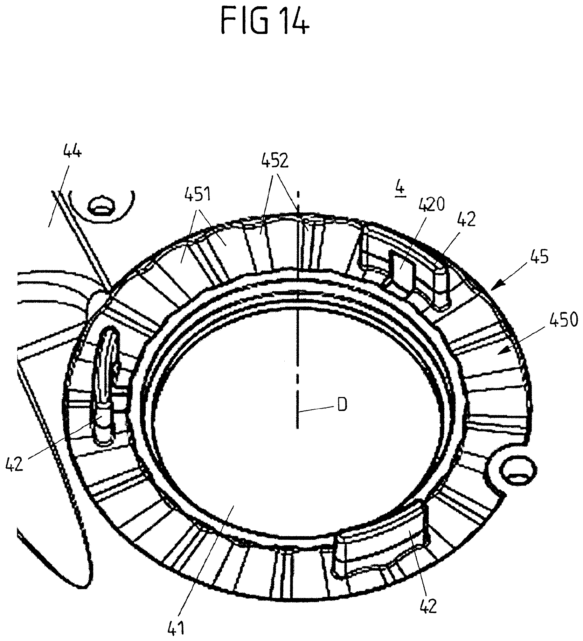

Bei den vorangehend erläuterten Ausführungsbeispielen wird das Seilausgangsgehäuse 2 über seine Gehäuseabschnitte 21 an eine Anlagestruktur 45 an dem Flächenelement 40 des Trägerelements 4 angesetzt und gelangt dabei über die Fußabschnitte 210 der Gehäuseabschnitte 21 mit den rippenförmig vorstehenden Formschlusselementen 42 an dem Trägerelement 4 in Eingriff. Wie der vergrößerten Ansicht gemäß Fig. 14 zu entnehmen ist, bildet die Anlagestruktur 45 einen Ring um die in dem Trägerelement 4 geformte Öffnung 41, über die die Seiltrommel 3 mit dem Antriebsrad 6 wirkverbunden ist. Die Anlagestruktur 45 ist wellenförmig ausgestaltet und weist radial zur Drehachse D erstreckte Erhebungen 451 in Form von Wellenbergen und zwischen den Erhebungen 451 liegende, radial erstreckte Vertiefungen 452 in Form von Wellentälern auf. Die Erhebungen 451 und die Vertiefungen 452 sind umfänglich um die Drehachse D alternierend aneinander angereiht und bildet somit eine periodische Struktur aus, an die das Seilausgangsgehäuse 2 mit seinen Fußabschnitten 21 angesetzt werden kann.

Fig. 14 zeigt das Trägerelement 4 im Bereich der Anlagestruktur 45 an der Seite, an die das Seilausgangsgehäuse 2 anzusetzen ist. Wie insbesondere auch in Zusammenschau mit Fig. 1A und 1B ersichtlich ist, ist die wellenförmig Anlagestruktur 45 beidseitig in das Trägerelement 4 eingeformt, sodass die Materialstärke (Materialdicke) im Bereich der Anlagestruktur 45 im Wesentlichen konstant bleibt. Materialanhäufungen an der Anlagestruktur 45 werden somit vermieden, was einen Verzug an der Anlagestruktur 45 reduzieren und damit Abweichungen der Anlagestruktur 45 von ihrer Sollform vermindern kann.

An die Anlagestruktur 45 wird das Seilausgangsgehäuse 2 mit seinen Gehäuseabschnitten 21 angesetzt, indem die Fußabschnitte 210 der Gehäuseabschnitte 21 mit der Anlagestruktur 45 in Anlage gebracht werden. Wie aus Fig. 13A bis 13F ersichtlich, weisen die Fußabschnitte 210 der Gehäuseabschnitte 21 jeweils eine Formgebung auf, die der Formgebung der Anlagestruktur 45 angepasst ist. So weisen die Fußabschnitte 210 jeweils drei Erhebungen 215, 216 mit dazwischen liegenden Vertiefungen auf, die formschlüssig mit den Vertiefungen 452 und Erhebungen 451 der Anlagestruktur 45 in Eingriff gebracht werden können.

Die Erhebungen 215, 216 eines jeden Fußabschnitts 210 können eine gleiche Höhe (betrachtet axial entlang der Drehachse D) aufweisen. Denkbar und möglich ist aber auch, dass beispielsweise die mittige Erhebung 216 eine größere Höhe als die äußeren beiden Erhebungen 215 aufweist. Beim Ansetzen des Seilausgangsgehäuses 2 an die Anlagestruktur 45 kommt es somit zu einer (geringfügigen) elastischen Verformung an den Fußabschnitten 210, was die Spielfreiheit des Seilausgangsgehäuses 2 gegenüber dem Trägerelement 4 verbessern kann.

Bei dem Ausführungsbeispiel des Seilausgangsgehäuses 2 gemäß Fig. 13A bis 13F sind die Fußabschnitte 210 der Gehäuseabschnitte 21 jeweils über eine schlitzförmige Formschlussöffnung 212 von einer Rückwand 213 des zugeordneten Gehäuseabschnitts 21 freigeschnitten. Die Formschlussöffnung 212 erstreckt sich entlang der gesamten Breite des Fußabschnitts 210 (betrachtet in Umfangsrichtung um die Drehachse D), sodass die Fußabschnitte 210 entlang ihrer gesamten Breite von der Rückwand 213 freigeschnitten sind.

Die Formschlussöffnung 212 erstreckt sich hierbei auch in axial von dem Fußabschnitt 210 erstreckte Seitenwandungen 214 hinein, was ermöglicht, an dem Fußabschnitt 210 eine gewünschte Elastizität einzustellen.

Aufgrund der in die Seitenwandungen 214 hinein erstrecken Formschlussöffnung 212 ergibt sich bei einer Verformung des Fußabschnitts 210 durch Druck auf die mittlere Erhebung 216 insbesondere, dass die äußeren Erhebungen 215 elastisch (entlang einer Umfangsrichtung um die Drehachse D) aufeinander zu gezogen werden. Hierdurch kann der Eingriff in die Anlagestruktur 45 bei günstiger Spielfreiheit verbessert werden.

Mit Blick auf die Formgebung der Fußabschnitte 210 der Gehäuseabschnitte 21 ist das Ausführungsbeispiel gemäß Fig. 1-9 identisch dem Ausführungsbeispiel des Seilausgangsgehäuses 2 gemäß Fig. 13A bis 13F. Wie anhand eines Vergleichs von Fig. 5 und Fig. 13A ersichtlich ist, unterscheiden sich die Ausführungsbeispiele der Seilausgangsgehäuse 2 gemäß Fig. 1-9 und Fig. 13A bis 13F (lediglich) durch die Weite der schlitzförmigen Formschlussöffnung 212.

Grundsätzlich sind unterschiedliche Varianten für das Seilausgangsgehäuse 2 zum Ansetzen an die Anlagestruktur 45 denkbar und möglich.

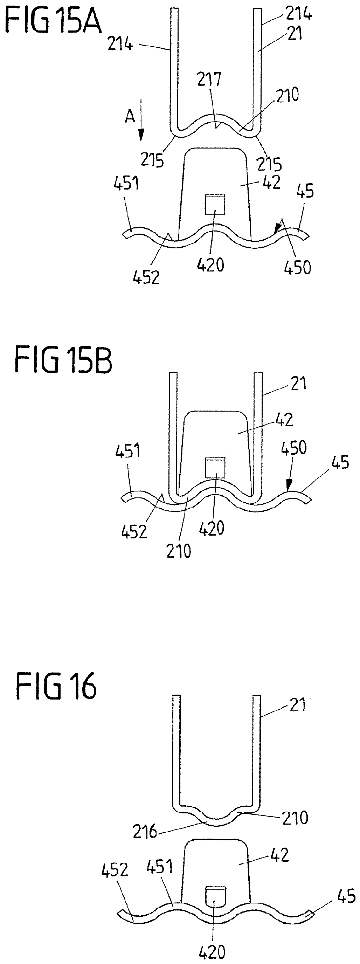

Beispielsweise kann, wie schematisch in Fig. 15A und 15B dargestellt ist, der Fußabschnitt 210 eines Gehäuseabschnitts 21 derart vorgeformt sein, dass Erhebungen 215 und Vertiefungen 217 komplementär zu den Vertiefungen 452 und Erhebungen 451 der Anlagestruktur 45 sind. In diesem Fall kann der Gehäuseabschnitt 21 mit seinem Fußabschnitt 210 weitestgehend starr ausgebildet sein. Bei Ansetzen des Gehäuseabschnitts 21 an die Anlagestruktur 45 in eine Ansetzrichtung A gelangt der Fußabschnitt 210 formschlüssig in Anlage mit der Anlagestruktur 45, ohne dass eine (nennenswerte) Verformung an dem Fußabschnitt 210 stattfindet.

Während bei dem Ausführungsbeispiel gemäß Fig. 15A und 15B der Fußabschnitt 210 zwei äußere Erhebungen 215 und eine dazwischenliegende Vertiefung 217 aufweist, ist bei dem Ausführungsbeispiel gemäß Fig. 16 an dem Fußabschnitt 210 eine mittige Erhebung 216 gebildet. Wiederum ist der Fußabschnitt 210 in seiner Formgebung komplementär zur Anlagestruktur 45.

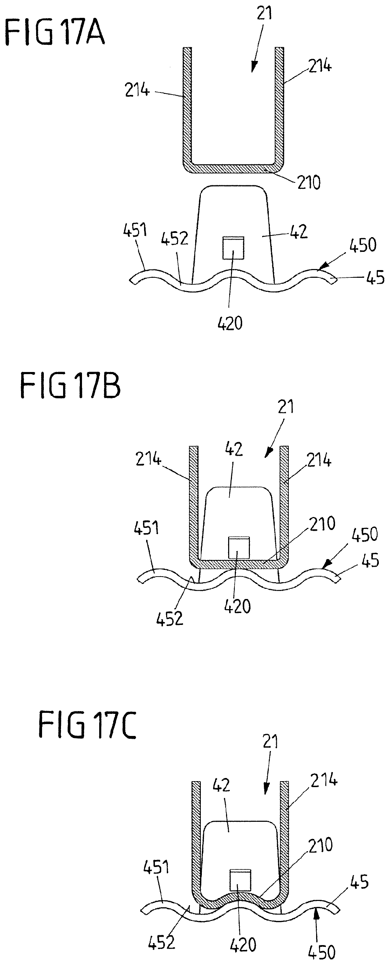

Bei dem Ausführungsbeispiel gemäß Fig. 17A bis 17C ist der Fußabschnitt 210 eines Gehäuseabschnitts 21 des Seilausgangsgehäuses 2 nicht vorgeformt, sondern aus einem derart elastischen Material gefertigt, dass sich die Form des Fußabschnitts 210 komplementär zu der Anlagestruktur 45 anpassen kann, wenn das Seilausgangsgehäuse 2 an das Trägerelement 4 angesetzt wird. Wird der Fußabschnitt 210 eines Gehäuseabschnitts 21 an eine Erhebung 451 der Anlagestruktur 45 angesetzt, so beult sich der Fußabschnitt 210 entsprechend aus und schmiegt sich an die Erhebung 451 an, sodass auf diese Weise eine günstige Anlage des Seilausgangsgehäuses 2 an dem Trägerelement 4 erhalten wird.

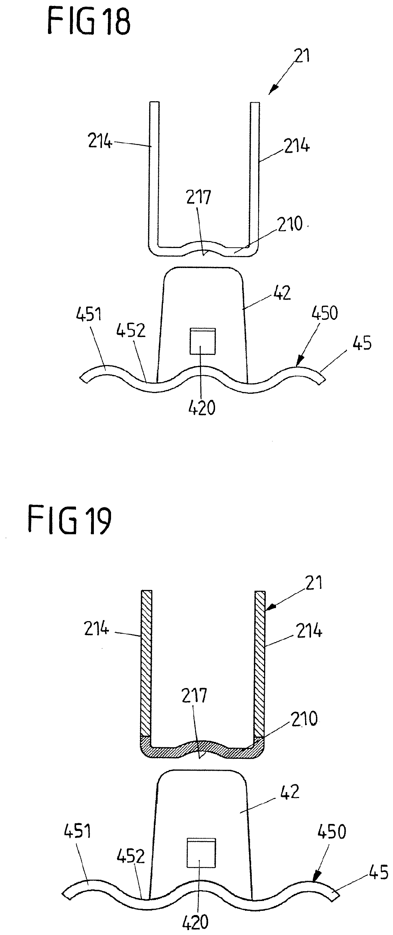

Denkbar und möglich ist hierbei auch, wie schematisch in Fig. 18 dargestellt, eine (geringfügige) Vorformung an dem Fußabschnitt 110 vorzusehen, indem zum Beispiel eine (kleine) Vertiefung 217 an dem Fußabschnitt 210 gebildet wird. Bei Ansetzen an das Trägerelement 4 greift eine Erhebung 451 der Anlagestruktur 45 in die vorgeformte Vertiefung 217 ein, wobei sich beim Ansetzen der Fußabschnitt 210 weiter verformt und dadurch an die Anlagestruktur 45 anschmiegt.

Denkbar und möglich ist auch, wie schematisch in Fig. 19 dargestellt, einen oder mehrere der Gehäuseabschnitte 21 aus unterschiedlichen Materialien zu fertigen, beispielsweise mittels eines 2-Komponenten-Spritzgussverfahrens. So können beispielsweise die Rückwand 113 und die Seitenwandungen 214 eines Gehäuseabschnitts 21 aus einem vergleichsweise harten Material gefertigt werden, während der Fußabschnitt 210 aus einem vergleichsweise weichen Material mit einem niedrigen Elastizitätsmodul geformt wird. Der Gehäuseabschnitt 21 ist somit insbesondere an seinem Fußabschnitt 210 elastisch verformbar und kann sich dort, wo er mit der Anlagestruktur 45 in Anlage gelangt, der Formgebung der Anlagestruktur 45 anpassen.

Durch die wellenförmige Anlagestruktur 45 kann zum einen eine günstige Anlage des Seilausgangsgehäuses 2 an dem Trägerelement 4 bereitgestellt werden. Das Seilausgangsgehäuse 2 kann hierbei in unterschiedlichen, zueinander verdrehten Stellungen an das Trägerelement 4 angesetzt werden, nämlich bei den dargestellten Ausführungsbeispielen in drei unterschiedlichen Drehstellungen (vorgegeben durch die Anzahl der Formschlusselemente 42), wobei grundsätzlich auch mehr diskrete Drehstellungen vorgesehen sein können.

Die wellenförmige Anlagestruktur 45 führt zudem zu einer Versteifung am umfänglichen Rand um die Öffnung 41 in dem Trägerelement 4. Zusammen mit der spielfreien Festlegung des Seilausgangsgehäuses 2 an dem Trägerelement 4 kann dies eine Schwingungsanregung an dem Trägerelement 4 im Betrieb der Antriebsvorrichtung 1 reduzieren.

Die Erfindung ist nicht auf die vorangehend geschilderten Ausführungsbeispiele beschränkt, sondern lässt sich grundsätzlich auch in gänzlich andersgearteter Weise, im Rahmen der Erfindung wie durch die Ansprüche definiert, verwirklichen.

Eine Antriebsvorrichtung der beschriebenen Art ist insbesondere nicht beschränkt auf den Einsatz an einem Fensterheber, sondern kann auch zum Verstellen eines anderen Verstellelements, beispielsweise eines Schiebedachs oder dergleichen, in einem Fahrzeug dienen.

Die Antriebsvorrichtung kann in einfacher Weise insbesondere unter Verwendung eines (einzigen) axial verspannenden Befestigungselements montiert werden. Es ergibt sich eine Montage in wenigen Montageschritten, die einfach und günstig bei zuverlässiger Festlegung des Seilausgangsgehäuses und des Antriebsgehäuses an dem Trägerelement sein kann.

### Bezugszeichenliste

- 1: Antriebsvorrichtung
- 10: Seil
- 11: Führungsschiene
- 110, 111: Umlenkung
- 12: Mitnehmer
- 13: Fensterscheibe
- 2: Seilausgangsgehäuse
- 20: Boden
- 200, 201: Strukturelement (Versteifungsrippe)
- 202: Aussparung (Materialschwächung)
- 21: Gehäuseabschnitt
- 210: Fußabschnitt
- 211: Rastelement
- 212: Formschlussöffnung (Schlitzöffnung)
- 213: Rückwand
- 214: Seitenwandungen
- 215,216: Erhebung
- 217: Vertiefung
- 22: Lagerelement (Lagerdom)
- 220: Zentrierkonus
- 221: Öffnung
- 23: Sicherungselement
- 3: Seiltrommel
- 30: Körper
- 300: Seilrille
- 31: Hohlrad
- 310: Verzahnung
- 32: Auflageelement
- 4: Trägerelement (Aggregateträger)
- 40: Flächenabschnitt
- 41: Öffnung
- 42: Formschlusselement
- 420: Rastausnehmung
- 43: Formschlusselement
- 44: Ausformung
- 440: Ausformung
- 45: Anlagering
- 450: Anlagestruktur (Wellenstruktur)
- 451: Erhebung (Wellenberg)
- 452: Vertiefung (Wellental)
- 46: Auflagering
- 5: Dichtelement
- 50: Dichtring
- 51: Eingriffsabschnitt
- 52: Gekrümmter Abschnitt
- 6: Antriebsrad
- 60: Körper
- 600: Außenverzahnung
- 61: Verbindungsrad
- 610: Verzahnung
- 62: Öffnung
- 7: Antriebsgehäuse
- 70: Gehäusetopf
- 71: Befestigungseinrichtung (Eingriffsbuchse)
- 710: Formschlussöffnung
- 72: Lagerelement (Lagerdom)
- 720: Öffnung
- 721: Eingriffsöffnung
- 722: Zentriereingriff
- 73: Motortopf
- 74: Schneckengehäuse
- 75: Gehäusedeckel
- 76: Elektronikgehäuse
- 760: Platine
- 761: Gehäuseplatte
- 762: Steckverbinder
- 8: Motoreinheit
- 80: Elektromotor
- 800: Antriebswelle
- 81: Antriebsschnecke
- 82: Lager
- 9: Befestigungselement
- 90: Schaft
- 91: Kopf
- A: Ansetzrichtung
- D: Drehachse
- X1, X2, X3: Spiel

## Patentansprüche

1. Antriebsvorrichtung (1) für eine Verstelleinrichtung zum Verstellen eines Fahrzeugteils, insbesondere eines Fensterhebers, mit
- einem Trägerelement (4),
- einer Seiltrommel (3),
- einem an dem Trägerelement (4) anordbaren Seilausgangsgehäuse (2), das die Seiltrommel (3) um eine Drehachse (D) drehbar lagert und mit zumindest einem Gehäuseabschnitt (21) an das Trägerelement (4) ansetzbar ist,
- einer Motoreinheit (8) zum elektromotorischen Antreiben der Seiltrommel (3) und
- ein an einer von dem Seiltrommelgehäuse (2) abgewandten Seite des Trägerelements (4) angeordnetes Antriebsgehäuse (7), das ein mit der Motoreinheit (8) in Getriebeverbindung stehendes Antriebsrad (6) lagert,
**dadurch gekennzeichnet,**
**dass** das Trägerelement (4) eine Anlagestruktur (450) mit einer Mehrzahl von aneinander angereihten, alternierend zueinander angeordneten Erhebungen (451) und Vertiefungen (452) aufweist und der zumindest eine Gehäuseabschnitt (21) des Seilausgangsgehäuses (2) mit einem Fußabschnitt (210) an die Anlagestruktur (450) ansetzbar ist, wobei die Anlagestruktur (450) ringförmig um die Drehachse (D) erstreckt ist und die Erhebungen (451) und Vertiefungen (452) umfänglich um die Drehachse (D) alternierend aneinander angereiht sind.

2. Antriebsvorrichtung (1) nach Anspruch 1, **dadurch gekennzeichnet, dass** die Erhebungen (451) und Vertiefungen (452) eine Wellenstruktur ausbilden.

3. Antriebsvorrichtung (1) nach Anspruch 1 oder 2, **dadurch gekennzeichnet, dass** der Fußabschnitt (210) ein zu der Anlagestruktur (450) komplementäres Profil aufweist.

4. Antriebsvorrichtung (1) nach Anspruch 3, **dadurch gekennzeichnet, dass** der Fußabschnitt (210) zumindest eine zu einer Vertiefung (452) der Anlagestruktur (450) komplementäre Erhebung (215, 216) und/oder zumindest eine zu einer Erhebung (451) der Anlagestruktur (450) komplementäre Vertiefung (217) aufweist.

5. Antriebsvorrichtung (1) nach Anspruch 1 oder 2, **dadurch gekennzeichnet, dass** der Fußabschnitt (210) zumindest abschnittsweise elastisch ist und bei Ansetzen an die Anlagestruktur (450) elastisch verformt wird, sodass der Fußabschnitt (210) formschlüssig mit der Anlagestruktur (450) in Anlage gelangt.

6. Antriebsvorrichtung (1) nach Anspruch 5, **dadurch gekennzeichnet, dass** der zumindest eine Gehäuseabschnitt (21) in einem ersten Bereich aus einem ersten Material mit einem ersten Elastizitätsmodul und in einem zweiten Bereich, insbesondere an dem Fußabschnitt (210), aus einem zweiten Material mit einem niedrigeren, zweiten Elastizitätsmodul gefertigt ist.

7. Antriebsvorrichtung (1) nach einem der vorangehenden Ansprüche, **gekennzeichnet durch** ein radial zur Drehachse (D) beabstandetes Formschlusselement (42), das an dem Trägerelement (4) oder dem Fußabschnitt (210) angeordnet ist und bei an dem Trägerelement (4) angeordnetem Seilausgangsgehäuse (2) in eine Formschlussöffnung (212) an dem jeweils anderen Bauteil formschlüssig eingreift.

8. Antriebsvorrichtung (1) nach Anspruch 7, **dadurch gekennzeichnet, dass** das Formschlusselement (42) an dem Trägerelement (4) angeordnet ist, gegenüber der Anlagestruktur (450) parallel zur Drehachse (D) vorsteht und in eine Formschlussöffnung (212) an dem Fußabschnitt (210) des zumindest einen Gehäuseabschnitts (21) eingreift.

9. Antriebsvorrichtung (1) nach Anspruch 7 oder 8, **dadurch gekennzeichnet, dass** die Formschlussöffnung (212) durch eine kreisbogenförmig um die Drehachse (D) erstreckte Schlitzöffnung gebildet ist.

10. Antriebsvorrichtung (1) nach einem der Ansprüche 7 bis 9, **dadurch gekennzeichnet, dass** die Formschlussöffnung (212) in dem flächig an die Anlagestruktur (450) ansetzbaren Fußabschnitt (210) gebildet ist und sich in zumindest eine radial von einer Rückwand (213) vorstehende, parallel zur Drehachse (D) von dem Fußabschnitt (210) erstreckte Seitenwandung (214) des zumindest einen Gehäuseabschnitts (21) hinein erstreckt.

11. Antriebsvorrichtung (1) nach einem der vorangehenden Ansprüche, **dadurch gekennzeichnet, dass** das Seilausgangsgehäuse (2) ein erstes Lagerelement (22) zum Lagern der Seiltrommel (3) und das Antriebsgehäuse (7) ein zweites Lagerelement (72) zum Lagern des Antriebsrads (6) aufweisen, wobei das Seilausgangsgehäuse (2) und das Antriebsgehäuse (7) über ein zwischen dem ersten Lagerelement (22) und dem zweiten Lagerelement (72) wirkendes Befestigungselement (9) aneinander befestigt sind.

12. Antriebsvorrichtung (1) nach Anspruch 11, **dadurch gekennzeichnet, dass** eines der Lagerelemente (22, 72) einen konischen Abschnitt (220) und das andere der Lagerelemente (72, 22) einen Zentriereingriff (722) zum Zusammenwirken mit dem konischen Abschnitt (220) zum Zentrieren des ersten Lagerelements (22) und des zweiten Lagerelements (72) zueinander aufweist.

13. Antriebsvorrichtung (1) nach Anspruch 12, **dadurch gekennzeichnet, dass**
- in einer ersten Montagestellung, in der das Seilausgangsgehäuse (2) und das Antriebsgehäuse (7) an dem Trägerelement (4) angeordnet, aber noch nicht über das Befestigungselement (9) axial zueinander verspannt sind, der konische Abschnitt (220) und der Zentriereingriff (722) ein axiales Spiel (X2) zueinander aufweisen, und
- in einer zweiten Montagestellung, in der das Seilausgangsgehäuse (2) und das Antriebsgehäuse (7) über das Befestigungselement (9) axial zueinander verspannt sind, der konische Abschnitt (220) und der Zentriereingriff (722) miteinander in Anlage sind.

14. Antriebsvorrichtung (1) nach einem der Ansprüche 11 bis 13, **dadurch gekennzeichnet, dass** das Seilausgangsgehäuse (2) einen Boden (20) aufweist, von dem das erste Lagerelement (22) vorsteht, wobei der Boden (20) bei Verspannen des Seilausgangsgehäuses (2) mit dem Antriebsgehäuse (7) zumindest abschnittsweise elastisch verformbar ist.

15. Antriebsvorrichtung (1) nach Anspruch 14, **dadurch gekennzeichnet, dass** der Boden (20) zumindest ein Strukturelement (200, 201) aufweist, in dem an zumindest einem Ort eine Aussparung (202) zum Bereitstellen einer Sollverformungsstelle gebildet ist, wobei das Strukturelement (200, 201) insbesondere durch eine Versteifungsrippe gebildet ist.

## Claims

1. A drive device (1) for an adjustment installation for adjusting a vehicle part, in particular a power window actuator, having
- a carrier element (4);
- a cable drum (3); and
- a cable exit housing (2) which is disposable on the carrier element (4) and which mounts the cable drum (3) so as to be rotatable about a rotation axis (D) and which by way of at least one housing portion (21) is attachable to the carrier element (4);
- a motor unit (8) for electromotively driving the cable drum (3), and
- a drive housing (7) which is disposed on a side of the carrier element (4) that faces away from the cable drum housing (2) and which mounts a drive wheel (6) that in terms of gearing is connected to the motor unit (8),
**characterized in that**
the carrier element (4) has a contact structure (450) having a plurality of elevations (451) and depressions (452) that are successively lined up and are mutually disposed in an alternating manner, the at least one housing portion (21) of the cable exit housing (2) by way of a base portion (210) being attachable to the contact structure (450), wherein the contact structure (450) extends annularly about the rotation axis (D), and the elevations (451) and depressions (452) are successively lined up in an alternating circumferential manner about the rotation axis (D).

2. The drive device (1) as claimed in claim 1, **characterized in that** the elevations (451) and depressions (452) configure a corrugated structure.

3. The drive device (1) as claimed in claim 1 or 2, **characterized in that** the base portion (210) has a profile that is complementary to that of the contact structure (450).

4. The drive device (1) as claimed in claim 3, **characterized in that** the base portion (210) has at least one elevation (215, 216) that is complementary to a depression (452) of the contact structure (450), and/or at least one depression (217) that is complementary to an elevation (451) of the contact structure (450).

5. The drive device (1) as claimed in claim 1 or 2, **characterized in that** the base portion (210) at least in portions is elastic and when being attached to the contact structure (450) is elastically deformed such that the base position (210) comes to bear in a positive-locking manner on the contact structure (450).

6. The drive device (1) as claimed in claim 5, **characterized in that** the at least one housing portion (21) in a first region is made from a first material having a first elasticity modulus and in a second region, in particular on the base portion (210), is made from a second material having a lower, second elasticity modulus.

7. The drive device (1) as claimed in one of the preceding claims, **characterized by** a positive-lock element (42) which is radially spaced apart from the rotation axis (D) and which is disposed on the carrier element (4) or the base portion (210), and in the case of a cable exit housing (2) being disposed on the carrier element (4) engages in a positive-locking manner in a positive-lock opening (212) on the respective other component.

8. The drive device (1) as claimed in claim 7, **characterized in that** the positive-lock element (42) is disposed on the carrier element (4), projects from the contact structure (450) so as to be parallel to the rotation axis (D), and engages in a positive-lock opening (212) on the base portion (210) of the at least one housing portion (21).

9. The drive device (1) as claimed in claim 7 or 8, **characterized in that** the positive-lock opening (212) is formed by an arcuate slot opening that extends about the rotation axis (D).

10. The drive device (1) as claimed in one of claims 7 to 9, **characterized in that** the positive-lock opening (212) is formed in the base portion (210) that is attachable in a planar manner to the contact structure (450) and extends into a side wall (214) of the at least one housing portion (21), said side wall (214) projecting radially from a rear wall (213) and extending from the base portion (210) so as to be parallel to the rotation axis (D).

11. The drive device (1) as claimed in one of the preceding claims, **characterized in that** the cable exit housing (2) has a first bearing element (22) for mounting the cable drum (3), and the drive housing (7) has a second bearing element (72) for mounting the drive wheel (6), wherein the cable exit housing (2) and the drive housing (7) are fastened to one another by way of a fastening element (9) which acts between the first bearing element (22) and the second bearing element (72).

12. The drive device (1) as claimed in claim 11, **characterized in that** one of the bearing elements (22, 72) has a conical portion (220), and the other of the bearing elements (72, 22) has centering engagement (722) for interacting with the conical portion (220) in order for the first bearing element (22) and the second bearing element (72) to be mutually centered.

13. The drive device (1) as claimed in claim 12, **characterized in that**
- in a first assembly position in which the cable exit housing (2) and the drive housing (7) are disposed on the carrier element (4) but are not yet mutually axially braced by way of the fastening element (9), the conical portion (220) and the centering engagement (722) have mutual axial play (X2); and
- in a second assembly position in which the cable exit housing (2) and the drive housing (7) are mutually axially braced by way of the fastening element (9), the conical portion (220) and the centering engagement (722) bear on one another.

14. The drive device (1) as claimed in one of claims 11 to 13, **characterized in that** the cable exit housing (2) has a base (20) from which the first bearing element (22) projects, wherein the base (20), when bracing the cable exit housing (2) in relation to the drive housing (7), is at least in portions elastically deformable.

15. The drive device (1) as claimed in claim 14, **characterized in that** the base (20) has at least one structural element (200, 201) in which a recess (202) for providing a predetermined breaking point is formed in at least one location, wherein the structural element (200, 201) is formed by a reinforcement rib.

## Revendications

1. Dispositif d'entraînement (1) pour un système de déplacement servant à déplacer une partie de véhicule, en particulier un lève-vitre, avec
- un élément porteur (4),
- un tambour de câble (3),
- un logement de sortie de câble (2) pouvant être disposé sur l'élément porteur (4), qui supporte le tambour de câble (3) de manière à pouvoir tourner autour d'un axe de rotation (D) et avec au moins une partie de logement (21) sur l'élément porteur (4),
- une unité moteur (8) pour l'entraînement électromoteur du tambour de câble (3) et
- un logement d'entraînement (7) disposé sur une face de l'élément porteur (4) opposée au logement de tambour de câble (2), qui supporte une roue motrice (6) en liaison de transmission avec l'unité moteur (8),
**caractérisé en ce**
**que** l'élément porteur (4) présente une structure d'appui (450) avec une pluralité d'élévations (451) et de creux (452) joints les uns aux autres, disposés en alternance les uns par rapport aux autres et l'au moins une partie de logement (21) du logement de sortie de câble (2) peut être appliquée sur la structure d'appui (450) avec une partie pied (210), dans lequel la structure d'appui (450) s'étend de manière annulaire autour de l'axe de rotation (D) et les élévations (451) et creux (452) sont joints les uns aux autres en alternance de manière périphérique autour de l'axe de rotation (D).

2. Dispositif d'entraînement (1) selon la revendication 1, **caractérisé en ce que** les élévations (451) et creux (452) réalisent une structure ondulée.

3. Dispositif d'entraînement (1) selon la revendication 1 ou 2, **caractérisé en ce que** la partie pied (210) présente un profil complémentaire de la structure d'appui (450).

4. Dispositif d'entraînement (1) selon la revendication 3, **caractérisé en ce que** la partie pied (210) présente au moins une élévation (215, 216) complémentaire d'un creux (452) de la structure d'appui (450) et/ou au moins un creux (217) complémentaire d'une élévation (451) de la structure d'appui (450).

5. Dispositif d'entraînement (1) selon la revendication 1 ou 2, **caractérisé en ce que** la partie pied (210) est élastique au moins sur certaines parties et est déformée de manière élastique lorsqu'elle est appliquée sur la structure d'appui (450), de sorte que la partie pied (210) parvient en appui par coopération de formes avec la structure d'appui (450).

6. Dispositif d'entraînement (1) selon la revendication 5, **caractérisé en ce que** l'au moins une partie de logement (21) est fabriquée dans une première zone à partir d'un premier matériau avec un premier module d'élasticité et dans une deuxième zone, en particulier sur la partie pied (210), à partir d'un deuxième matériau avec un deuxième module d'élasticité plus bas.

7. Dispositif d'entraînement (1) selon l'une quelconque des revendications précédentes, **caractérisé par** un élément à coopération de formes (42) espacé radialement par rapport à l'axe de rotation (D), qui est disposé sur l'élément porteur (4) ou la partie pied (210) et s'insère par coopération de formes dans une ouverture à coopération de formes (212) sur l'autre pièce respective lorsque le logement de sortie de câble (2) est disposé sur l'élément porteur (4).

8. Dispositif d'entraînement (1) selon la revendication 7, **caractérisé en ce que** l'élément à coopération de formes (42) est disposé sur l'élément porteur (4), fait saillie par rapport à la structure d'appui (450) parallèlement à l'axe de rotation (D) et s'insère dans une ouverture à coopération de formes (212) sur la partie pied (210) de l'au moins une partie de logement (21).

9. Dispositif d'entraînement (1) selon la revendication 7 ou 8, **caractérisé en ce que** l'ouverture à coopération de formes (212) est formée par une ouverture fendue étendue en forme d'arc de cercle autour de l'axe de rotation (D).

10. Dispositif d'entraînement (1) selon l'une quelconque des revendications 7 à 9, **caractérisé en ce que** l'ouverture à coopération de formes (212) est formée dans la partie pied (210) pouvant être appliquée à plat sur la structure d'appui (450) et s'étend à l'intérieur d'au moins une paroi latérale (214) de l'au moins une partie de logement (21) faisant saillie radialement d'une paroi arrière (213), étendue parallèlement à l'axe de rotation (D) à partir de la partie pied (210).

11. Dispositif d'entraînement (1) selon l'une quelconque des revendications précédentes, **caractérisé en ce que** le logement de sortie de câble (2) présente un premier élément de support (22) pour le support du tambour de câble (3) et le logement d'entraînement (7) un deuxième élément de support (72) pour le support de la roue motrice (6), dans lequel le logement de sortie de câble (2) et le logement d'entraînement (7) sont fixés l'un sur l'autre par l'intermédiaire d'un élément de fixation (9) agissant entre le premier élément de support (22) et le deuxième élément de support (72).

12. Dispositif d'entraînement (1) selon la revendication 11,
**caractérisé en ce qu'**un des éléments de support (22, 72) présente une partie conique (220) et l'autre des éléments de support (72, 22) une prise de centrage (722) pour la coopération avec la partie conique (220) pour le centrage du premier élément de support (22) et du deuxième élément de support (72) l'un par rapport à l'autre.

13. Dispositif d'entraînement (1) selon la revendication 12, **caractérisé en ce que**
- dans une première position de montage, dans laquelle le logement de sortie de câble (2) et le logement d'entraînement (7) sont disposés sur l'élément porteur (4), mais pas encore mis en tension axialement l'un par rapport à l'autre par l'intermédiaire de l'élément de fixation (9), la partie conique (220) et la prise de centrage (722) présentent un jeu axial (X2) l'un par rapport à l'autre, et
- dans une deuxième position de montage, dans laquelle le logement de sortie de câble (2) et le logement d'entraînement (7) sont mis en tension axialement l'un par rapport à l'autre par l'intermédiaire de l'élément de fixation (9), la partie conique (220) et la prise de centrage (722) sont en appui l'un avec l'autre.

14. Dispositif d'entraînement (1) selon l'une quelconque des revendications 11 à 13, **caractérisé en ce que** le logement de sortie de câble (2) présente un fond (20), duquel le premier élément de support (22) fait saillie, dans lequel le fond (20) peut être déformé élastiquement au moins sur certaines parties lors de la mise en tension du logement de sortie de câble (2) avec le logement d'entraînement (7).

15. Dispositif d'entraînement (1) selon la revendication 14, **caractérisé en ce que** le fond (20) présente au moins un élément structural (200, 201), dans lequel un creux (202) est formé sur au moins un emplacement pour la fourniture d'un point de déformation théorique, dans lequel l'élément structural (200, 201) est formé en particulier par une nervure de renforcement.
